# EUROPÄISCHE PATENTANMELDUNG

(11) **EP 1 006 633 A1**
(43) Veröffentlichungstag der Anmeldung: **07.06.2000**
(21) Anmeldenummer: 99121919.7
(22) Anmeldetag: 05.11.1999
(51) Int. Cl.: H02G 3/04

(54) **Leitungsführungskanal**

(30) Priorität: 02.12.1998 DE 29821519 U
(71) Anmelder: Tehalit GmbH, D-67716 Heltersberg (DE)
(72) Erfinder: Schnurr, Richard, 66957 Vinningen (DE)
(74) Vertreter: Patentanwälte Möll und Bitterich

(57) **Zusammenfassung**

Gegenstand der Erfindung sind Leitungsführungskanäle (10), vorzugsweise Sockelleistenkanäle, die mit ihrer Rückwand (11) an einer Gebäudewand (1) zu befestigen sind. Um den Kanal (10) mit definiertem und gleichbleibendem Abstand zum Fußboden (3) montieren zu können, ist an der Seitenwand (12) eine Abstandsleiste (14) angeformt. Die Abstandsleiste (14) besitzt einen schwachen Querschnitt und ist leicht nach hinten geneigt, so dass sie gegebenenfalls leicht beseitigt werden kann.

## Beschreibung

Die Erfindung betrifft Leitungsführungskanäle insbesondere in Form von Sockelleistenkanälen, gemäß dem Oberbegriff des Anspruchs 1

Leitungsführungskanäle der hier relevanten Art umfassen im wesentlichen ein meist trogförmiges Unterteil, welches die Leitungen aufnimmt, und wenigstens einen auf das Unterteil lösbar aufsetzbaren Deckel. Üblicherweise wird die Kanalrückwand an einer Gebäudewand befestigt, während sich wenigstens eine Seitenwand parallel zum Boden bzw. der Decke des Gebäudes erstreckt. Falls es sich um einen Sockelleistenkanal handelt, sitzt die Seitenwand oft direkt auf dem Boden auf.

Müssen die Leitungsführungskanäle um Ecken verlegt oder müssen Abzweigungen angebracht werden, so entstehen unschöne Stöße und Schnittkanten. Aus diesem Grunde gibt es zu allen Leitungsführungskanälen sogenannte Formteile in Form von Innenecken, Außenecken, Flachwinkeln, Endplatten sowie T- und Kreuzstücken, die die Schnittkanten überdecken. Die Befestigung dieser Formstücke erfolgt durch Stecken, Rasten oder Aufschnappen.

Werden bei einem Leitungsführungskanalsystem Formteile verwendet, die die Kanalunterteile übergreifen, so müssen die Seitenwände der Kanäle mit Abstand zum Boden bzw. zur Decke montiert werden. Dieser Abstand darf aber auch nicht zu groß sein, da sonst eine unschöne Lücke entsteht. Die exakte Montage ist daher einigermaßen problematisch.

Hier setzt nun die vorliegende Erfindung ein, die sich die Aufgabe gestellt hat das Einhalten eines korrekten Abstandes sicherzustellen und somit die Montagearbeiten zu beschleunigen.

Diese Aufgabe wird gelöst durch einen Leitungsführungskanal mit den Merkmalen des Anspruchs 1.

Diese Abstandshalterleiste lässt sich an den Kanalunterteilen praktisch ohne Mehraufwand anformen. Beim Aufsetzen der Formteile lässt sie sich leicht zur Seite biegen. Für eine abstandsfreie Montage der Kanalunterteile kann sie einfach zur Seite geklappt oder ganz abgetrennt werden.

Gemäß einer vorteilhaften Weiterbildung besitzt die Abstandsleiste einen Fuß mit reduziertem Querschnitt. Dies erleichtert das Umbiegen oder Abtrennen der Leiste.

Gemäß einer Weiterbildung der Erfindung ist die Kante zwischen der Rückwand und der Seitenwand, entlang der die Abstandsleiste angebracht ist, angefast. Dadurch wird ausreichend Platz zur Verfügung gestellt, in den die Abstandsleiste beim Aufsetzen der Formstücke ausweichen kann.

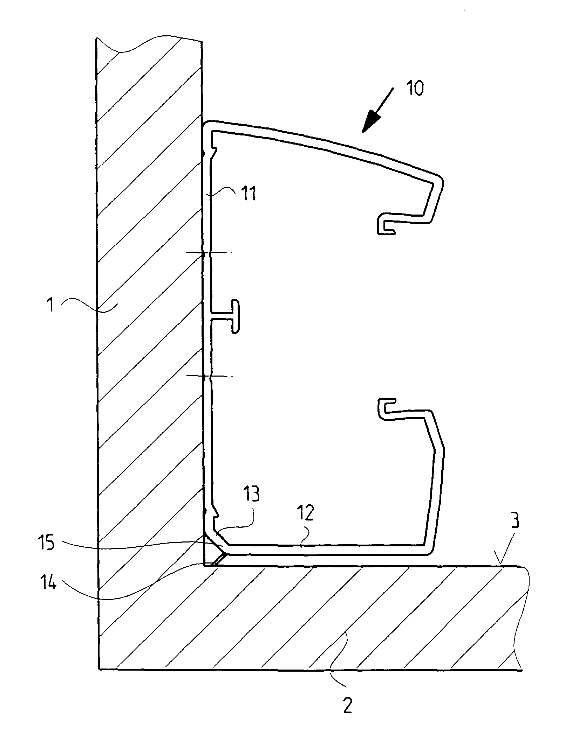

Anhand der Zeichnung soll die Erfindung in Form eines Ausführungsbeispiels erläutert werden.

Man erkennt einen Querschnitt durch eine Gebäudeecke mit Gebäudewand 1 und Boden 2. In dieser Ecke ist ein Sockelleistenkanal 10 montiert. Der Sockelleistenkanal 10 besitzt eine Rückwand 11, die an der Gebäudewand 1 mit Dübel und Schrauben befestigt wird, und eine untere Seitenwand 12, die sich parallel zur Oberfläche 3 des Bodens 2 erstreckt. Die Kante 13 zwischen der Kanalrückwand 11 und der Kanalseitenwand 12 ist angefast. Parallel zu der Kante 13 ist an der Außenseite der Seitenwand 12 eine Abstandsleiste 14 angeformt, die einen korrekten Abstand zwischen der Bodenoberseite 3 und der Kanalseitenwand 12 sicherstellt.

Die Abstandsleiste 14 ist leicht nach hinten geneigt und besitzt einen Fuß 15 mit reduziertem Querschnitt. Wird ein Formteil oder Deckel über das Kanalunterteil 10 gestülpt, so kann die Abstandsleiste 14 dank ihres Fußes 15 mit reduziertem Querschnitt und dank des durch die angefaste Kante 13 gebildeten Freiraums nach hinten ausweichen.

## Patentansprüche

1. Leitungsführungskanal (10), vorzugsweise Sockelleistenkanal, im wesentlichen umfassend
- eine Rückwand (11), zu befestigen an einer Gebäudewand (1),
- und eine Seitenwand (12), die sich parallel zu einem Boden (2, 3) bzw. einer Decke des Gebäudes erstreckt,
gekennzeichnet durch das Merkmal:
- an der Seitenwand (12) ist außen eine Abstandsleiste (14) angeformt.

2. Leitungsführungskanal nach Anspruch 1, gekennzeichnet durch das Merkmal:
- die Abstandsleiste (14) ist leicht nach hinten geneigt.

3. Leitungsführungskanal nach Anspruch 1 oder 2, gekennzeichnet durch das Merkmal:
- der Fuß (15) der Abstandsleiste (14) besitzt einen reduzierten Querschnitt.

4. Leitungsführungskanal nach Anspruch 1, 2 oder 3, gekennzeichnet durch die Merkmale:
- die Kante (13) zwischen Rückwand (11) und Seitenwand (12) ist angefast,
- die Abstandsleiste (14) verläuft neben dieser Kante (13).
